# EUROPEAN PATENT APPLICATION

(11) **EP 4 559 845 A1**
(43) Date of publication of application: **28.05.2025**
(21) Application number: 24212320.6
(22) Date of filing: 12.11.2024
(51) Int. Cl.: B65G 47/14, B65G 47/24, B65G 47/244, B65B 7/28

(54) **MACHINE FOR HANDLING TRIGGER CAPS**

(30) Priority: 24.11.2023 IT 202300024984
(71) Applicant: Erre Enne S.r.l., 15062 Bosco Marengo (Alessandria) (IT)
(72) Inventor: RUBINI, Norman, 15122 Litta Parodi (Alessandria) (IT)
(74) Representative: Zermani Biondi Orsi, Umberto

(57) **Abstract**

A machine for handling (100) trigger caps (A) comprises a pre-orienter (101) rotatable around its own rotation axis (X) and having, along its own periphery, a plurality of angularly spaced seats and having a size adapted to house the dispensing nozzle (B) of a trigger cap (A) in order to ensure a pre-orientation. An orientation device (1) for trigger caps (A) communicating with an outlet section (21) of the pre-orienter (101) comprises a support (2) defining a lying plane (5) for the dispensing nozzles (B) and defining a handling path. The device (1) comprises an orienter assembly (3) configured to hold onto each small supply tube (C) and rotate the small tube (C) around its main axis (D). The device (1) comprises a blocking shoulder (4) sized to come into abutment with each nozzle (B).

## Description

The present invention relates to a machine for handling trigger caps.

The trigger caps referred to basically define a dispensing nozzle from which a small supply tube branches off extending along its own main axis. The nozzle also comprises a trigger for dispensing a dispensable liquid when the trigger cap is screwed onto a container.

Instead, the containers arrive from a filling station where they are filled with a pre-established product, before being screwed with the trigger caps.

As is known, the trigger caps inside automatic assembly chains, before being screwed to a respective container, must have a specific spatial orientation.

To date, the trigger caps, before being collected and conveyed to a screwing station, are oriented vertically thanks to the use of a centrifugal orienter.

However, the mere vertical positioning of the trigger caps is not sufficient in order to ensure a precise and immediate screwing of the latter with respective containers.

In fact, the orientation of the nozzle, and consequently of the trigger cap, changes depending on the position of the trigger for the delivery of liquid with respect to the supply small tube.

Disadvantageously, centrifugal orienters fail to determine the latter described spatial orientation, hence the need to introduce a new device into the assembly line.

In other words, the centrifugal orienters of trigger caps currently on the market only guarantee a partial orientation of the trigger caps, with consequent defects and delays in production.

When exiting of the orienter, it therefore required not only an overall orientation of the trigger cap but also an orientation of the single nozzle component.

In fact, defining a spatial orientation of the nozzle a priori ensures fewer snags along the supply line of the trigger caps to the screwing station.

The technical task of the present invention is therefore to make available a machine for handling trigger caps that is able to overcome the drawbacks arising from the prior art.

The object of the present invention is therefore to make available a machine for handling trigger caps capable of speeding up an automated production line.

A further object of the present invention is therefore to make available a machine for handling trigger caps that facilitates and guarantees the correct orientation process of the trigger caps.

A further object of the present invention is therefore to make available a machine for handling trigger caps that presents the possibility of intuitively and immediately carrying out maintenance on the device when needed.

The stated technical task and specified objects are substantially achieved by an orientation machine for trigger caps comprising the technical features set forth in one or more of the appended claims. The dependent claims correspond to possible embodiments of the invention.

According to the present invention, a machine for handling trigger caps is shown.

The trigger caps are each provided with a dispensing nozzle from which a small supply tube branches off extending along its own main axis.

Preferably, the machine comprises a pre-orienter rotatable around its own rotation axis and having, along its own periphery, a plurality of angularly spaced seats and having a size adapted to house the dispensing nozzle of a trigger cap in order to guarantee its pre-orientation.

Preferably, said plurality of seats also guarantees a predetermined spacing.

Preferably, the orienter comprises an outlet section.

Preferably, the machine comprises an orientation device for trigger caps communicating with said outlet section of the mechanical orienter.

Preferably, each trigger cap is provided with a dispensing nozzle from which a small supply tube branches off extending along its own main axis. The orientation device comprises a support.

The support defines a lying plane for the dispensing nozzles of the plurality of trigger caps.

The support defines with the lying plane a handling path.

Preferably, the support comprises a rotating drum around its own rotation axis.

Preferably, the handling path is tangential to said mechanical orienter at the outlet section.

The orientation device comprises an orienter assembly.

The orienter assembly is placed at a predetermined axial distance from the lying plane.

The orienter assembly comprises a first and a second component provided respectively with a first and a second contact edge facing each other and placed at a first transverse operating distance.

The first and second contact edges extend along the handling path.

The orienter assembly is configured to hold each small supply tube of the plurality of trigger caps between the first and second contact edge, with the first and second contact edge placed at the first transverse operating distance.

The orienter assembly is configured to generate a relative movement along the handling path between the first and second edge.

The relative movement between the first and second edge allows to impart a rotation to the small tube around its main axis.

The rotation allows to vary an orientation of the nozzle on the lying plane until a preferred orientation is reached.

The orientation device comprises a blocking shoulder.

The blocking shoulder is placed at the support.

The blocking shoulder is sized to come into abutment with each nozzle of the plurality of trigger caps until the preferred orientation is reached.

Further characteristics and advantages of the present invention will become clearer from the indicative, and therefore non-limiting, description of a device, a machine and an orientation method for trigger caps.

Such description will be set forth herein below with reference to the accompanying drawings, provided for merely indicative and therefore non-limiting purposes, wherein:

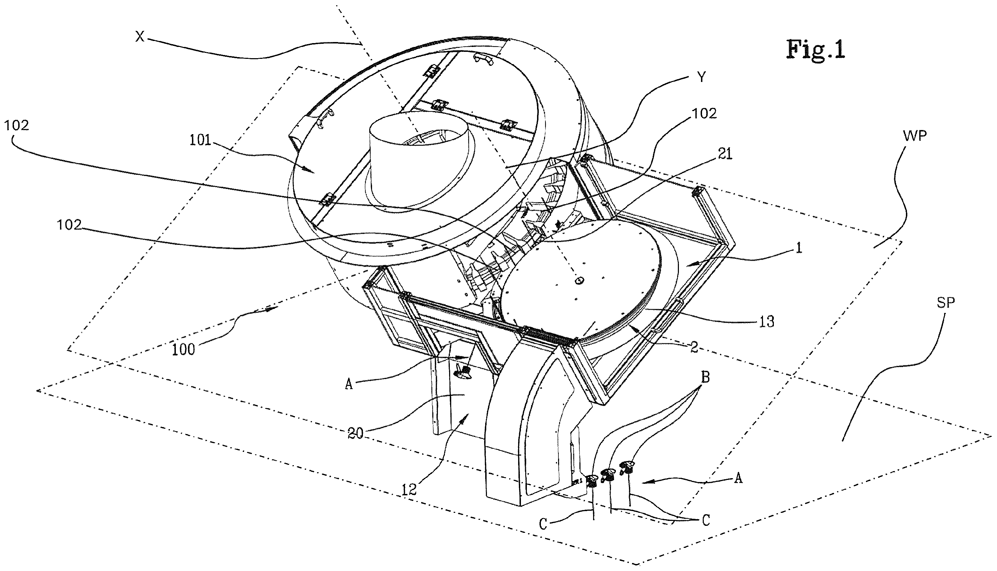

- figure 1 is an overall view of a possible embodiment of the handling machine subject-matter of the present invention;

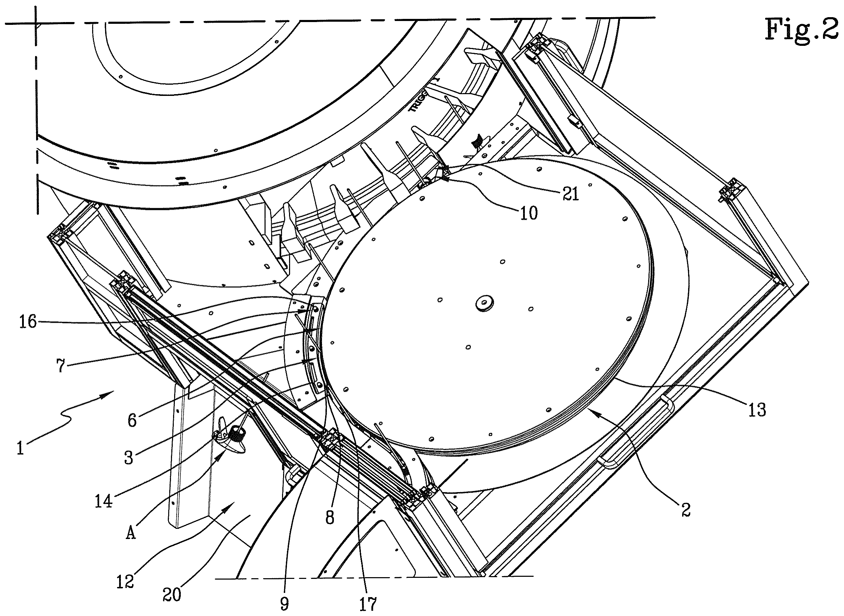

- figure 2 is a zoom on the device of the handling machine subject-matter of the present invention shown in figure 1;

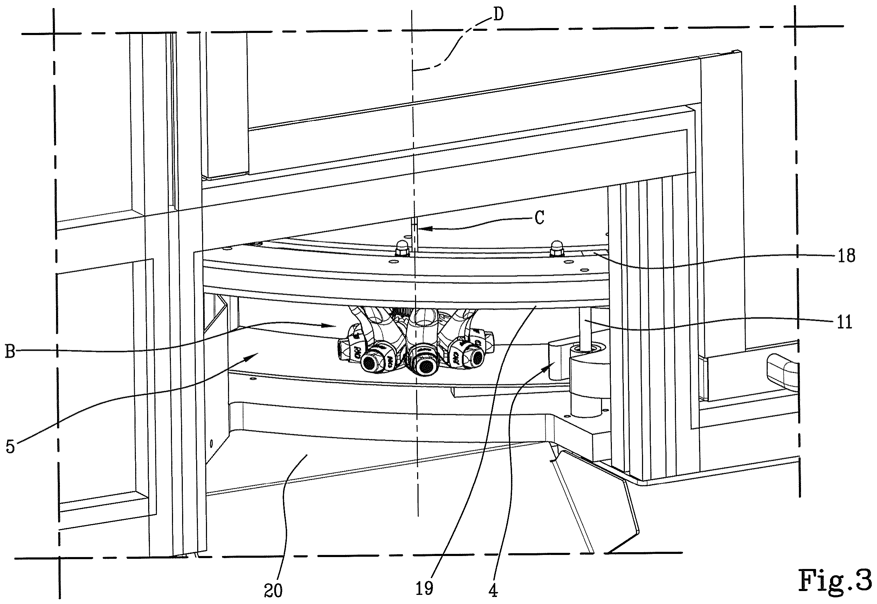

- figure 3 is a perspective view of a detail of an orientation device inside the machine subject-matter of the present invention;

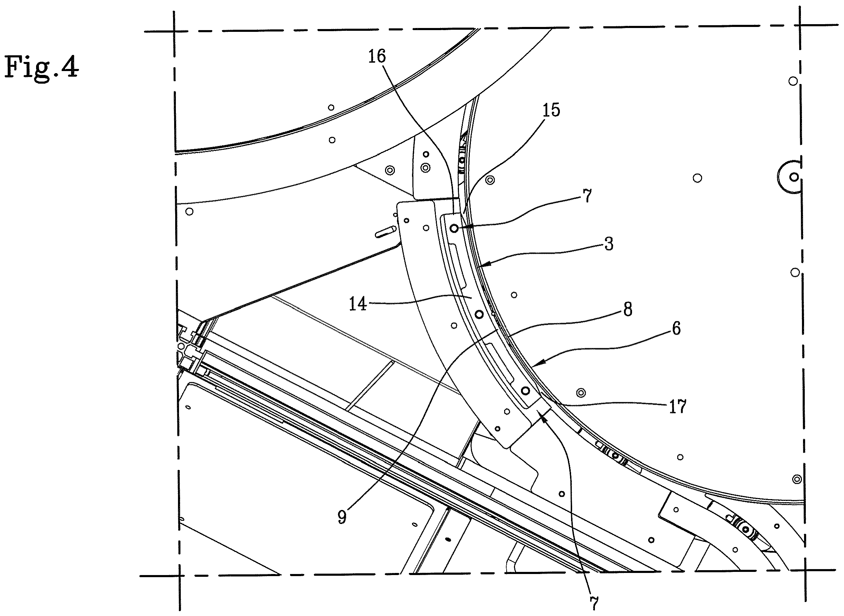

- figure 4 is a top view of a detail of the device of figure 3;
- figure 5 is a view of a detail of the interior of the device of figure 3.

With reference to the attached figures, an orientation device for trigger caps (A) has been indicated overall with 1 which, for simplicity of description, will be referred to below as device 1. Each trigger cap (A) is provided with a dispensing nozzle (B) from which a small supply tube (C) branches off extending along its own main axis (D).

The main axis (D) of the trigger cap (A) follows the vertical extension of the small supply tube (C).

The extension of the main axis (D) and consequently the trigger cap (A) are perpendicular to a horizontal plane.

Note that the term "orientation" in this text means the angular position assumed by the trigger cap (A), in particular by the nozzle (B), in the horizontal plane.

The device 1 comprises a support 2, an orienter assembly 3 and a blocking shoulder 4.

The support 2 defines a lying plane 5 for the dispensing nozzles (B) of the plurality of trigger caps (A) and defines a handling path.

According to a possible embodiment, the support 2 comprises a rotating drum 13 around its own rotation axis "Y".

Preferably, the handling path is circumferential and begins with the arrival of the trigger caps (A) in a substantially vertical position and ends with the exit of the trigger caps (A) from the device 1, always in a substantially vertical position, but with a predetermined orientation in the horizontal plane.

The support 2 defines an automated rotary handling path.

According to a possible embodiment, the support 2 comprises a polymeric coating 18 in order not to damage the trigger cap (A) when the latter is inside the handling path.

Placed at a predetermined axial distance from the lying plane 5 of the support 2 there is the orienter assembly 3.

The expression "axial distance" is intended in this text to define a distance measured along the axis D.

In other words, the axial distance is preferably a distance evaluated along a vertical direction.

The orienter assembly 3 comprises a first component 6 and a second component 7 provided respectively with a first edge 8 and a second contact edge 9 facing each other and placed at a first transverse operating distance 15.

The first and second contact edge 8, 9 extend along the handling path.

The expression "first transverse distance" is intended in this text to define a distance measured transversely, preferably orthogonally, to the axis D.

In other words, the first transverse distance is preferably a distance assessed along a horizontal direction.

Preferably, the first transverse operating distance 15 is a radial distance, with reference to a rotation axis of the support.

Preferably, the first and/or second contact edge 8, 9 are both rigid (i.e. not flexible) but comprise, at least partially along one of their outer peripheries, a coating 18 made of high friction coefficient material.

The coating material 18 defines a deformable portion of the first and/or second edge 8, 9, partly elastically yieldable along the first transverse operating direction.

Even more preferably, the coating 18 comprises an elastomeric material, preferably rubber (natural or synthetic).

Advantageously, thanks to its deformability, the material of the coating 18 allows to increase the friction, without the need to have a perfect adjustment of the distance between the first and second contact edge 8, 9. Furthermore, the coating 18 of the first and/or second contact edge 8, 9 allows the rotation of the trigger cap (A), by friction, without the latter being damaged.

The orienter assembly 3 is configured to hold each small supply tube (C) of the plurality of trigger caps (A) between the first and second contact edge 8, 9, and generate a relative movement along the handling path between the first and second contact edge 8, 9.

Specifically, the first and second contact edge 8, 9 are placed at the first transverse operating distance 15.

The relative movement generated by the orienter assembly 3 allows to impart a rotation to the small tube (C) around its main axis (D) to vary an orientation of the nozzle (B) on the lying plane 5 until a preferred orientation is reached.

According to a possible embodiment of the present invention, the first component 6 of the orienter assembly 3 comprises a rotating disc that is concentric to the support 2, rigidly rotatable thereon.

The rotating disc is placed at the predetermined axial distance with respect to the lying plane 5 where a peripheral edge of the disc defines the first contact edge 8.

Preferably, the first 8 and the second contact edge 9 are continuous and counter-shaped to each other.

The first contact edge 8 of the rotating disc preferably has a substantially circular shape.

Similarly, the second contact edge 9 also has a substantially circular shape.

The first contact edge 8 of the rotating disc is configured to transmit a rotation to the plurality of trigger caps (A) around the axis D.

In other words, the first contact edge is arranged to transmit the rotation to the small tube (C) around its main axis (D).

Advantageously, the disc and the support 2 allow a controlled and automated advancement of the trigger cap (A) along the handling path.

The second edge 9 of the second component 7 is placed at the first transverse operating distance 15 from the first component 6 such that, with the rotation of the first component 6 with respect to the second component 7, it determines a speed difference between the second edge 9 and the first component 6.

The speed difference imparts, by friction, the rotation of the small tube (C) around its main axis (D).

In other words, since the first component 6 is movable and the second component 7 is fixed, when the small tube (C) is engaged between the first and second edge 8, 9, the trigger cap (A) rotates around its main axis (D) and moves following the handling path defined by the support 2.

According to a different embodiment, the support 2 does not have rotational movement but moves longitudinally, for example a conveyor belt.

In this case the orienter assembly 3 comprises longitudinally the two longitudinal contact edges 8, 9, of which only one of the two is moving.

According to a possible embodiment of the present invention, the second component 7 of the orienter assembly 3 is made in the form of at least one plate 14.

The plate 14 is placed near and in a radially external position with respect to the first component 6, and having the second contact edge 9 oriented towards the first component 6.

Preferably, the second edge 9 of the plate 14 at least partially follows the substantially circular shape of the first edge 8 of the rotating disc.

Preferably, the second component 7 extends between a first and a second end portion 16, 17 of the handling path, defining an accommodating section 10, for the small tubes (C) of the trigger caps, at the first end portion 16 of the handling path.

In this case, the first end portion 16 of the second contact edge 9 of the second component 7 has a radial distance from the first component 6 which decreases along the handling path defining the accommodating section 10.

In other words, the accommodating section 10 houses the trigger trap, defining a radially decreasing handling path.

According to a possible embodiment, the second component 7 comprises a radial adjustment system 19.

The radial adjustment system 19 is configured to move the second contact edge 9 away from or closer to the first contact edge 8 of the first component 6 in order to adjust the first transverse operating distance 15, so as to adapt the device 1 to trigger caps (A) with small tubes (C) of a different size.

Advantageously, the radial adjustment system 19 allows to use the same device 1 for the orientation of trigger caps (A) having different sizes and shapes.

Preferably, the second component 7 may further comprise a handling system 11 associated with the plate 14 and selectively switchable between a first configuration and a second configuration.

In the first configuration it keeps the first contact edge 8 and the second contact edge 9 at the first transverse operating distance 15.

In the second configuration it is configured to radially and/or vertically move the second contact edge 9 of the second component 7 away from the support 2 and/or from the first component 6.

Advantageously, the handling system 11 allows intuitive and immediate maintenance of the device 1 in the event of jams along the handling path or in the event that defective trigger caps (A) are present.

The device 1 may further comprise a rejection zone 12 placed at the second component 7.

The rejection zone 12 defines a secondary handling path 20 selectively accessible to the trigger caps when the handling system 11 is in the second configuration.

In other words, the handling system 11 allows the second contact edge 9 to be moved away from the first contact edge 8 and the defective trigger cap (A) to be eliminated directly in the rejection zone 12.

Once the maintenance of the device 1 has been carried out, the handling system 11 allows the second component 7 to be moved closer to the first component 6.

Once the handling path and the correct operation of the orienter assembly 3 have been re-established, the secondary handling path 20 is closed again, preventing any trigger caps (A) from being led into the rejection zone 12 by mistake.

The device 1 also comprises, as already stated, a blocking shoulder 4 placed at the support 2 and sized to come into abutment with each nozzle (B) of the plurality of trigger caps (A) until the preferred orientation is reached.

In other words, the blocking shoulder 4 comprises a thickness shaped in such a way as to define a block upon rotation of the trigger cap (A) when the latter reaches the preferred orientation.

The device 1 therefore comprises an abutment system that will sooner or later interact with the nozzle (B) of the trigger cap (A) to define the desired orientation.

Advantageously, the blocking shoulder 4 guarantees the correct orientation process of the trigger caps (A), before the latter are led to a collection and screwing station with respective containers.

According to a possible embodiment, the blocking shoulder 4 is defined by a cylindrical portion radially internal with respect to the handling path.

The present invention also makes available a machine for handling trigger caps 100 (A).

The handling machine 100 comprises a mechanical or centrifugal pre-orienter 101 configured to define a substantially vertical pre-orientation of the trigger caps (A) and a device 1 according to what has been previously described.

Preferably, said pre-orienter 101 is of a mechanical type.

The pre-orienter 101 is placed upstream of the handling path of the device 1.

In other words, the device 1 is operatively placed downstream of the pre-orienter 101.

According to a possible configuration of the machine 100, the pre-orienter 101 comprises an outlet section 21 communicating with said handling path of the device 1 in order to guarantee a continuous and automated movement of the trigger caps (A).

In other words, at the exit of the pre-orienter 101 there will be a guide station which actually causes the trigger cap (A) with its small tube (C) to enter an accommodating section 10 of the handling path of the device 1. The handling path is preferably tangent to the pre-orienter 101 at the outlet section 21.

The pre-orienter 101 comprises an element rotating around a respective rotation axis "X" which, through the centrifugal or gravity force, conveys the trigger caps (A) along a periphery.

Preferably, the rotating drum 13 of the orientation device 1 and said pre-orienter 101 are rotatable around the respective rotation axes X, Y, parallel to each other and orthogonal to a work plane WP of the machine 100 inclined with respect to the horizontal.

In other words, the machine 100 rests, with its own base not illustrated, on a horizontal support surface "SP", with respect to which the work surface "WP" has an inclination.

Said inclination is preferably comprised between 10 and 40 degrees.

Advantageously, in this way the overall dimensions of the machine are considerably reduced and its complexity is also reduced, not requiring transfer devices between the pre-orienter 101 and the orientation device 1. Along the periphery of the pre-orienter 101, in order to guarantee the substantially vertical pre-orientation of the trigger caps (A), seats 102 are obtained angularly equispaced from each other.

The seats 102 have a size and shape such as to allow the correct pre-orientation of the trigger caps (A).

Preferably, the seats 102 have a size adapted to house the dispensing nozzle (B) of a trigger cap (A) in order to guarantee a pre-orientation and a predetermined spacing.

The trigger caps (A) arriving at the peripheral seats 102 of the pre-orienter 101 with the correct orientation, i.e. in a substantially vertical position, proceed towards the device 1.

Preferably, the pre-orientation given by the pre-orienter 101, comprises not only the substantially vertical arrangement of the trigger caps (A) but also the direction in which they are then subsequently engaged by the device 1.

In other words, according to a possible embodiment, the pre-orienter 101 pre-orients the trigger caps (A) by placing them with the dispensing nozzle (B) in contact with the lying plane 5, and the small supply tube (C) upwards, away from the lying plane 5.

Advantageously, the handling machine 100 allows to speed up and guarantee the correct preferred orientation of the trigger caps (A).

The present invention also makes available a method for orienting trigger caps (A).

The method essentially comprises four main steps.

The first step consists in providing at least one trigger cap (A) comprising a dispensing nozzle (B) from which a small supply tube (C) branches off, extending along its own main axis (D) and pre-oriented so that the small tube (C) has a substantially vertical orientation.

The second step provides for holding the small supply tube (C) between a first and a second contact edge 8, 9.

In other words, once the trigger cap (A) has been selected, the latter is engaged and partially held through the small tube (C).

The step follows in which a first edge 8 is moved along an advancement direction, keeping the position of the second edge 9 fixed in order to impart a rotation to the trigger cap (A) around the main axis (D).

In other words, the rotation of one contact edge with respect to the other causes the small tube (C) to rotate and translate.

Advantageously, the roto-translation of the small tube (C) allows the dispensing nozzle (B) to rotate and translate integrally with it.

The fourth step provides for blocking the nozzle (B) of the trigger caps (A) at the instant in which a desired orientation of the nozzle (B) of the trigger cap (A) is reached.

Advantageously, this last step guarantees the correct preferred orientation of the trigger cap (A).

The method may further comprise a step of generating a friction on the small tube (C) of the trigger cap (A) in order to impart a rotation of the latter.

The trigger caps (A) that are already correctly oriented, despite the friction imparted, remain in said initial orientation thanks to the presence of a blocking shoulder 4, which prevents further rotation of the small tube (C).

Advantageously, the trigger cap (A), if already correctly oriented, will be blocked in said desired position and will proceed without further rotating around its main axis (D).

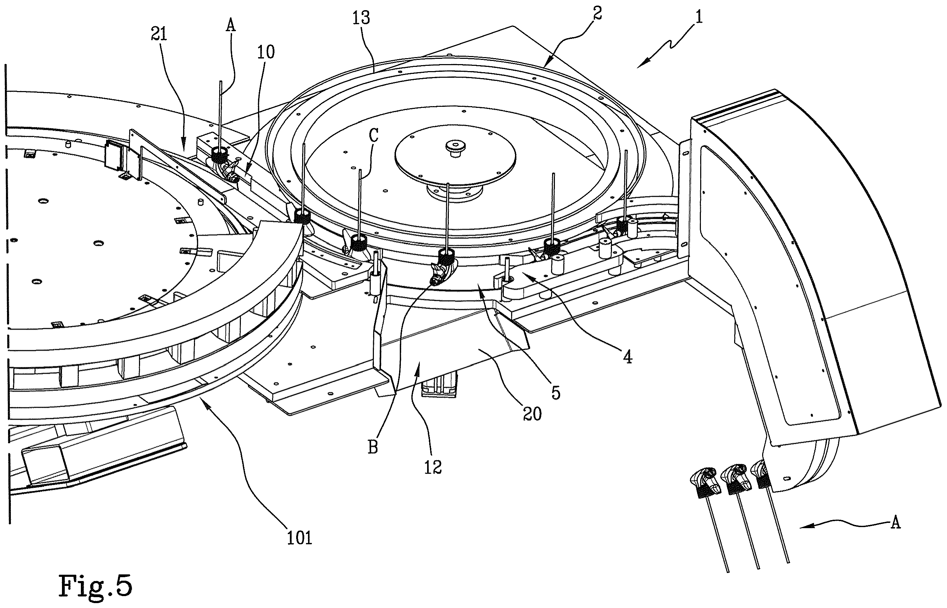

As shown in figure 5, the trigger caps (A), which instead have an incorrect orientation a priori, are rotated by friction around their own main axis (D) until they interact with the blocking shoulder 4 which acts as a stop for reaching the desired orientation.

According to a possible embodiment, the method comprises the step of guiding the small tube (C) of the trigger caps (A) in an accommodating section 10 of an orientation device 1 according to what has been previously described.

Preferably, in order to improve the maintenance of the device 1 or of the machine 100, the method comprises a step of removing defective trigger caps (A) from the accommodating section 10, by lifting a second component of the orientation device 1.

Finally, the method may provide for a last step consisting in collecting and conveying the trigger caps (A) to a screwing station.

In other words, downstream of the device 1 there is a trigger cap gripping machine (A), which is configured to bring the trigger cap (A) into a coupling area with a container.

The invention achieves its intended purpose and achieves important advantages. Advantageously, the device 1 and the orientation method for trigger caps (A) are able to overcome the drawbacks arisen from the prior art.

Advantageously, the device 1 and the orientation method are able to speed up an automated production line.

Advantageously, the device 1 and the orientation method make it possible to facilitate and guarantee the correct orientation process of the trigger caps (A).

Advantageously, the device 1 and the orientation method have the possibility of intuitively and immediately implementing maintenance on the device 1 when needed.

## Claims

1. Machine for handling (100) trigger caps (A), each provided with a dispensing nozzle (B) from which a small supply tube (C) branches off extending along its own main axis (D), said machine comprising:
- a pre-orienter (101) rotatable around its own rotation axis (X) and having, along its own periphery, a plurality of angularly spaced seats and having a size adapted to house the dispensing nozzle (B) of a trigger cap (A) in order to guarantee its pre-orientation; said pre-orienter (101) comprising an outlet section (21);
- an orientation device (1) for trigger caps (A) communicating with said outlet section (21) of the pre-orienter (101) and comprising:
- a support (2) defining a lying plane (5) for the dispensing nozzles (B) of said plurality of trigger caps (A) and comprising a rotating drum (13) around its own rotation axis (Y) and defining a handling path tangential to said pre-orienter (101) at the outlet section (21);
- an orienter assembly (3) placed at a predetermined axial distance from said lying plane (5) and comprising a first component (6) and a second component (7) provided respectively with a first edge (8) and a second contact edge (9) extending along said handling path, facing each other and placed at a first transverse operating distance (15), said orienter assembly (3) configured to
• hold each small supply tube (C) of said plurality of trigger caps (A) between said first and second contact edge (8, 9), with said first and second contact edge (8, 9) placed at said first transverse operating distance (15);
• generate a relative movement along the handling path between the first and second edge (8, 9) to impart a rotation to said small tube (C) around its main axis (D) to vary an orientation of said nozzle (B) on the lying plane (5) until a preferred orientation is reached;
- a blocking shoulder (4) placed at said support (2) and sized to come into abutment with each nozzle (B) of said plurality of trigger caps (A) until said preferred orientation is reached.

2. Machine (100) according to claim 1, wherein said first component (6) of the orienter assembly (3) comprises a rotating disc that is concentric to said rotating drum (13), rigidly rotatable thereon and placed at said predetermined axial distance with respect to said lying plane (5), wherein a peripheral edge of the rotating disc defines said first contact edge (8) and is designed to transmit said rotation to said small tube (C) around its main axis (D).

3. Machine (100) according to claim 1 or 2, wherein said second component (7) of the orienter assembly (3) comprises at least one plate (14), placed near and in a radially external position with respect to said first component (6) and having said second contact edge (9), with the second edge (9) oriented towards said first component (6) and placed at said first transverse operating distance (15) therefrom such that:
- a rotation of the first component (6) with respect to the second component (7) determines a speed difference between the second edge (9) and the first component (6);
- said speed difference imparts, by friction, said rotation of said small tube (C) around its own main axis (D).

4. Machine (100) according to claim 2 or 3, wherein said first transverse operating distance (15) is a radial distance.

5. Machine (100) according to one or more of the preceding claims, wherein said second component (7) extends between a first (16) and a second end portion (17) of said handling path, said first end portion (16) defining an accommodating section (10) for the small tubes (C) of the trigger caps.

6. Machine (100) according to claim 5, wherein said first end portion (16) of the second contact edge (9) of said second component (7) has a radial distance from said first component (6) which decreases along said handling path defining said accommodating section (10).

7. Machine (100) according to one or more of the preceding claims, wherein said first and/or said second contact edge (8, 9) comprise at least partially, along one of their outer peripheries, a coating (18) made of high friction coefficient material.

8. Machine (100) according to claim 7, wherein said coating (18) comprises an elastomeric material, preferably rubber.

9. Machine (100) according to one or more of the preceding claims, wherein said second component (7) comprises a radial adjustment system (19) configured to radially move said second contact edge (9) away from or closer to said first contact edge (8) of the first component (6), in order to adjust said first transverse operating distance (15), so as to adapt the device (1) to trigger caps (A) with small tubes (C) of a different size.

10. Machine (100) according to one or more of the preceding claims, wherein said second component (7) comprises a handling system (11) associated with said plate (14) and selectively switchable between a first configuration, wherein it keeps said first contact edge (8) and said second contact edge (9) at the first transverse operating distance (15), and a second configuration, wherein it is configured to radially and/or vertically move said second contact edge (9) of said second component (7) away from said first component (6).

11. Machine (100) according to claim 10, comprising a rejection zone (12) placed at said second component (7) and defining a secondary handling path (20) selectively accessible to the trigger caps when the handling system (11) is in the second configuration.

12. Machine (100) according to any one of the preceding claims, wherein said rotating drum (13) of the orientation device (1) and said pre-orienter (101) are rotatable about respective rotation axes (X, Y) parallel to each other and orthogonal to a work plane (WP) of the machine (100) inclined with respect to the horizontal.

13. Orientation device (1) for trigger caps (A), each provided with a dispensing nozzle (B) from which a small supply tube (C) branches off, extending along its own main axis (D), said orientation device (1) comprising:
- a support (2) defining a lying plane (5) for the dispensing nozzles (B) of said plurality of trigger caps (A) and defining a handling path;
- an orienter assembly (3) placed at a predetermined axial distance from said lying plane (5) and comprising a first component (6) and a second component (7) provided respectively with a first edge (8) and a second contact edge (9) extending along said handling path, facing each other and placed at a first transverse operating distance (15), said orienter assembly (3) configured to
• hold each small supply tube (C) of said plurality of trigger caps (A) between said first and second contact edge (8, 9), with said first and second contact edge (8, 9) placed at said first transverse operating distance (15);
• generate a relative movement along the handling path between the first and second edge (8, 9) to impart a rotation to said small tube (C) around its main axis (D) to vary an orientation of said nozzle (B) on the lying plane (5) until a preferred orientation is reached;
- a blocking shoulder (4) placed at said support (2) and sized to come into abutment with each nozzle (B) of said plurality of trigger caps (A) until said preferred orientation is reached.
